Europäisches Patentamt

European Patent Office

Office européen des brevets

(19)

(11) Veröffentlichungsnummer : **0 176 663**
**B1**

(12) **EUROPÄISCHE PATENTSCHRIFT**

(45) Veröffentlichungstag der Patentschrift :
27.07.88

(21) Anmeldenummer : 85106335.4

(22) Anmeldetag : 23.05.85

(51) Int. Cl.⁴ : **F 16 B 43/00**

(54) **Vorrichtung zum verspannenden Verbinden von mit Abstand zueinander liegenden Bauteilen.**

(30) Priorität : 03.10.84 DE 3436166

(43) Veröffentlichungstag der Anmeldung :
09.04.86 Patentblatt 86/15

(45) Bekanntmachung des Hinweises auf die Patenterteilung : 27.07.88 Patentblatt 88/30

(84) Benannte Vertragsstaaten :
**AT BE CH DE FR GB IT LI LU NL SE**

(56) Entgegenhaltungen :
**DE-A- 3 037 606**
**DE-C-    53 811**
**DE-C-   237 216**
**FR-A- 2 506 375**
**US-A- 1 362 270**
**US-A- 2 248 715**
**US-A- 4 433 879**

(73) Patentinhaber : **Ewald Witte & Co.**
**Höferstrasse 3-15 Postfach 101210**
**D-5620 Velbert 1 (DE)**

(72) Erfinder : **Rückert, Edvard**
**Karlsbader Strasse 38**
**D-5603 Wülfrath (DE)**
Erfinder : **Gölz, Gerhard**
**Zum Waschenberg 70**
**D-5620 Velbert (DE)**

(74) Vertreter : **Rieder, Hans-Joachim, Dr.**
**Corneliusstrasse 45 Postfach 11 04 51**
**D-5600 Wuppertal 11 (DE)**

Jouve, 18, rue St-Denis, 75001 Paris, France

## Beschreibung

Die Erfindung betrifft eine Vorrichtung zum verspannenden Verbinden von mit Abstand zueinanderliegenden Bauteilen mittels einer Verbindungsschraube und mittels im Abstandsraum angeordneter, sich mit der äußeren Breitseite an dem einen Bauteil abstützender Distanzscheibe, welche mit wendelgangförmig liegenden Steigungs-Flächen ausgestattet ist, denen formpassende wendelförmige, dem anderen Bauteil zugeordnete Gegensteigungs-Stützflächen gegenüberliegen und wobei die Drehung der Stützflächen zueinander das eingenommene Axialmaß bestimmt.

Eine bekannte Vorrichtung dieser Art (DE-C-237 216) dient als Schraubensicherung. Von der von der Verbindungsschraube durchsetzten Distanzscheibe geht ein radial gerichteter Ansatz aus, an welchem eine Feder des anderen, die Gegensteigungs-Stützflächen ausbildenden Bauteils angreift. Nach Aufschrauben einer Spannmutter auf einen Schraubbolzen wird ein Sicherungsstift aus der Bewegungsbahn eines Ansatzes entfernt, woraufhin eine Feder in Wirkung tritt und die Distanzscheibe relativ zur Scheibe des Bauteils verdreht. Hierdurch erfolgt ein selbsttätiges Nachspannen der Schraubensicherung bei einem etwaigen Lockern der Mutter oder Abnutzung der gegeneinandertretenden Stützflächen. Eine solche Bauform ist aufwendig und montagetechnisch ungünstig. Des weiteren ist aus DE-C-53 811 eine in ihrer Dicke verstellbare Unterlegscheibe bekannt, welche sich aus zwei Scheibenteilen zusammensetzt, die sich in einer Schraubenfläche berühren. Der eine Teil enthält eine etwa radial gerichtete Stiftschraube, mittels welcher ein Verstellkeil verlagerbar ist. Eine Verlagerung desselben führt zu einem Verdrehen der beiden Teile zueinander unter Veränderung der Dicke der Unterlegscheibe. Auch diese Bauform ist kompliziert und aufwendig.

Ein auf seiner Mantelfläche ein Schraubgewinde ausbildender Distanzkörper geht aus der DE-A-3 037 606 hervor. Der Distanzkörper ist durch eine dem Kerndurchmesser des Schraubgewindes angepaßtes Loch des einen Bauteils hindurchgeführt. Nach Einschrauben dieses Distanzkörpers überragt sein größerer Abschnitt noch das Bauteil. Der vorstehende Abschnitt ist dabei zu einem Mehrkant zum Verdrehen des Distanzkörpers gestaltet. Eine den letzteren durchsetzende Schraube legt sich an der Stirnseite des Distanzkörpers an und drückt diesen so weit zusammen, bis der Kopf sich über eine Hülse an der Wandung abstützt. Auch bei dieser Version ergibt sich eine erschwerte Montage. Ferner ist das eine Bauteil mit einem entsprechend großen Loch auszustatten. Darüber hinaus liegen Überstände vor verbunden mit einem erhöhten Materialaufwand des Distanzkörpers.

Dem Gegenstand der Erfindung liegt demgegenüber die Aufgabe zugrunde, eine Vorrichtung der in Rede stehenden Art so auszugestalten, daß sie bei herstellungstechnisch einfachem Aufbau eine erleichterte Montage gestattet.

Gelöst ist diese Aufgabe bei einer gattungsgemäßen Vorrichtung dadurch, daß die Distanzscheibe durch Verbindung zur Mantelfläche der Verbindungsschraube in die Abstützstellung mitgeschleppt ist.

Die Unteransprüche stellen vorteilhafte Weiterbildungen dar.

Zufolge derartiger Ausgestaltung ist eine Vorrichtung der in Rede stehenden Art geschaffen, die bei einfacher Bauform eine leichte Montage gewährleistet ungeachtet des tatsächlich vorhandenen Abstandsmaßes zwischen den beiden Bauteilen. Das Mitschleppen der Distanzscheibe geschieht nun durch Verbindung zur Mantelfläche der Verbindungsschraube, so daß zusätzliche Mittel nicht erforderlich sind. Durch Verdrehen der Verbindungsschraube wird daher die Distanzscheibe in ihre Abstützstellung mitgeschleppt. Die Spannkraft der Verbindungsschraube verhindert dann, daß die Distanzscheibe sich während der späteren Benutzung zurückdreht. Es bietet sich insbesondere an, die Verbindung durch Reibschluß zu erzeugen. Die Reibschlußkraft reicht dabei aus, die Distanzscheibe zu verdrehen. Ist die Abstützstellung erreicht, kann ausschließlich nur noch die Verbindungsschraube gedreht werden. Eine diesbezügliche Sicherung der geschaffenen Abstandsstellung ist begünstigt durch Zahnstufen auf den Steigungs-Stützflächen und-/oder Gegensteigungs-Stützflächen. Die Steigungs-Stützflächen können an der Breitseite der Distanzscheibe vorgesehen sein, an deren Mantelwand oder an der Wand der Innenhöhlung. Die Schraubeneindrehrichtung der Verbindungsschraube kann je nach Anordnung derselben in Bezug auf die Distanzscheibe und Bauteil entgegengesetzt oder gleichgerichtet zu den Steigungs-Stützflächen der Distanzscheibe verlaufen. Der entsprechende Reibschluß zwischen Mantelfläche und Verbindungsschraube macht jede weitere besondere Werkzeugbetätigung zum Verdrehen der Distanzscheibe überflüssig. Den Reibschluß mit einer entsprechenden Kunststoff-Fassung zu erzielen, ist für ein gesichertes Mitschleppen von erheblichem Vorteil und gestattet es auch, die Distanzscheibe aus hartem, den Verspannungskräften genügendem Material auszubilden. Es besteht ferner die Möglichkeit, die Distanzscheibe materialeinheitlich mit den entsprechenden Eigenschaften zu gestalten. Bei feinfühligen Verstell-Drehbewegungen ist es auch gestattet, die Gegensteigungs-Stützflächen in Art eines mantelseitigen Gewindes des Bauteils auszubilden. Die Anordnung einer entsprechenden federnden Zunge an einer den Reibschluß bildenden Kunststoff-Ummantelung führt in Verbindung mit der am anderen Bauteil vorgesehenen Schulter zu der Möglichkeit, die Distanzscheibe zunächst im Wege einer Art Vormontage am Bauteil zu befestigen. Sie kann dann nicht verlorengehen, und das Bauteil kann auch an schwer zugänglichen Stellen leicht angebracht werden. Da in der Regel die Verbindungsschraube mit mindestens mehreren Umdrehungen in ihr Gegengewinde eingeschraubt werden muß, führt der sich beim Durchstecken der Verbindungsschraube erzeugte Reibschluß zu einer sicheren Mitnahme der Distanzscheibe bis in die das lichte Abstandsmaß überbrückende Drehstellung. Vorteilhafterweise kann gegebenenfalls dabei ein Anschlag zur Begrenzung der Drehbewegung der Distanzscheibe vorgesehen sein, welcher die Maximaldrehung begrenzt auf die Umfangslänge einer Steigungsfläche.

Eine weitere Variation zeichnet sich dadurch aus, die Gegensteigungs-Stützflächen an der Stirnseite eines aus dem Bauteil gedrückten Kragens zu bilden. Ferner bietet sich die Möglichkeit an, die Gegensteigungs-Stützflächen an einer Büchse vorzusehen, die mittels eines von der bauteilseitigen Ringfläche vorstehenden Zapfens in einem Loch des Bauteils drehgesichert ist. Die Verbindung kann durch Verschraubung erzielt werden. Ferner kann der Zapfen verklipst sein. Auch ist ein Formschluß zwischen Zapfen und Loch möglich derart, daß der Zapfen als Kragen und mit vorstehenden Rippen ausgestattet ist, welche in entsprechende Nischen des Loches eintreten. Sodann ist es möglich, die bauteilseitigen Gegensteigungs-Stützflächen an einer mit einem Bund versehenen Büchse anzuordnen, wobei der Bund mit dem Bauteil durch Schweißpunkte oder durch Verkleben festgelegt ist. Eine andere Möglichkeit, den Reibschluß zu erreichen, besteht darin, der Distanzscheibe in entsprechender Ausrichtung eine Blattfeder zuzuordnen, die beim Einsetzen des Spannelements in Reibschluß zu diesem tritt. Eine besonders einfache Montage bietet sich dabei an, die Blattfeder von der Breitseite her in den sekantenförmig verlaufenden Kanal einzusetzen. Das Mitschleppen der Distanzscheibe läßt sich auch durch einen Formschluß zwischen der Verbindungsschraube und der Distanzscheibe erreichen. Eliminiert wird der Formschluß dann, wenn die Distanzscheibe in die Abstützstellung getreten ist durch weiteres Verdrehen der Verbindungsschraube in Relation zur stehenbleibenden Distanzscheibe.

Der Gegenstand der Erfindung ist auf der beiliegenden Zeichnung in mehreren Ausführungsbeispielen dargestellt. Es zeigt

Fig. 1 einen Lagerbock als Bauteil eines Scharniers in vergrößertem Maßstab mit im Abstandsraum zur Befestigungswand angeordneten Distanzscheiben, von denen die eine bereits in die Abstützstellung gebracht ist, betreffend die erste Ausführungsform,

Fig. 2 die Ansicht gemäß Pfeilrichtung II in Fig. 1,

Fig. 3 den Schnitt nach der Linie III-III in Fig. 2,

Fig. 4 in größerem Maßstab eine Ansicht der Gegensteigungs-Stützflächen des Lagerbocks,

Fig. 5 den Schnitt nach der Linie V-V in Fig. 4,

Fig. 6 den Schnitt nach der Linie VI-VI in Fig. 4,

Fig. 7 eine der Fig. 4 entsprechende Darstellung, jedoch mit aufgesteckter Kunststoff-Fassung,

Fig. 8 den Schnitt nach der Linie VIII-VIII in Fig. 7,

Fig. 9 die zu verbindenden Teile in erheblich vergrößerter Darstellung in Ansicht vor der Montage,

Fig. 10 eine ·Ansicht wie Fig. 9, jedoch mit aufgesteckter Kunststoff-Fassung in Schnittdarstellung,

Fig. 11 eine der Fig. 7 entsprechende Darstellung, jedoch nach der Montage,

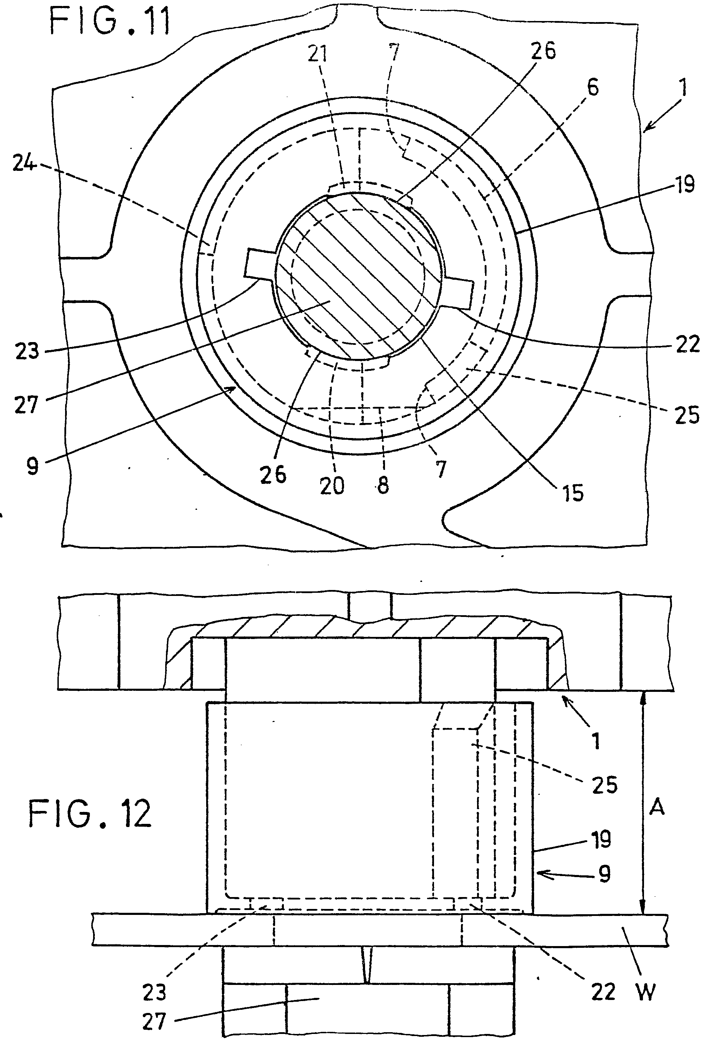

. Fig. 12 eine Draufsicht auf Fig. 11,

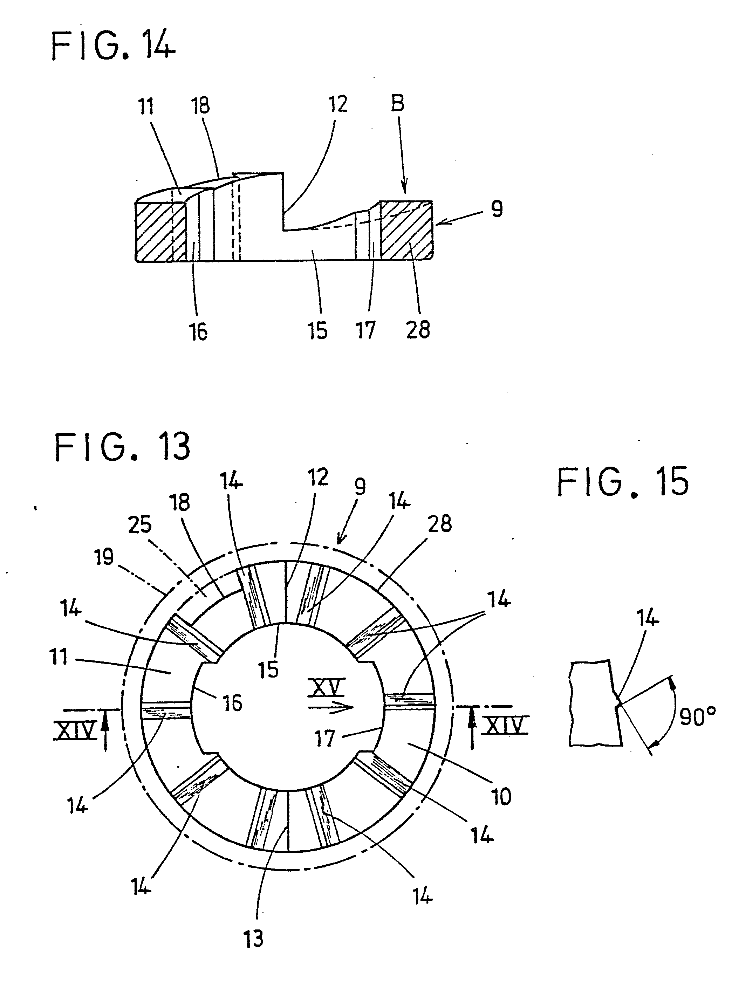

Fig. 13 eine Draufsicht auf die Distanzscheibe in stark vergrößertem Maßstab,

Fig. 14 den Schnitt nach der Linie XIV-XIV in Fig. 13,

Fig. 15 eine Ansicht in Pfeilrichtung XV gemäß Fig.13, gegen eine Zahnstufe gesehen,

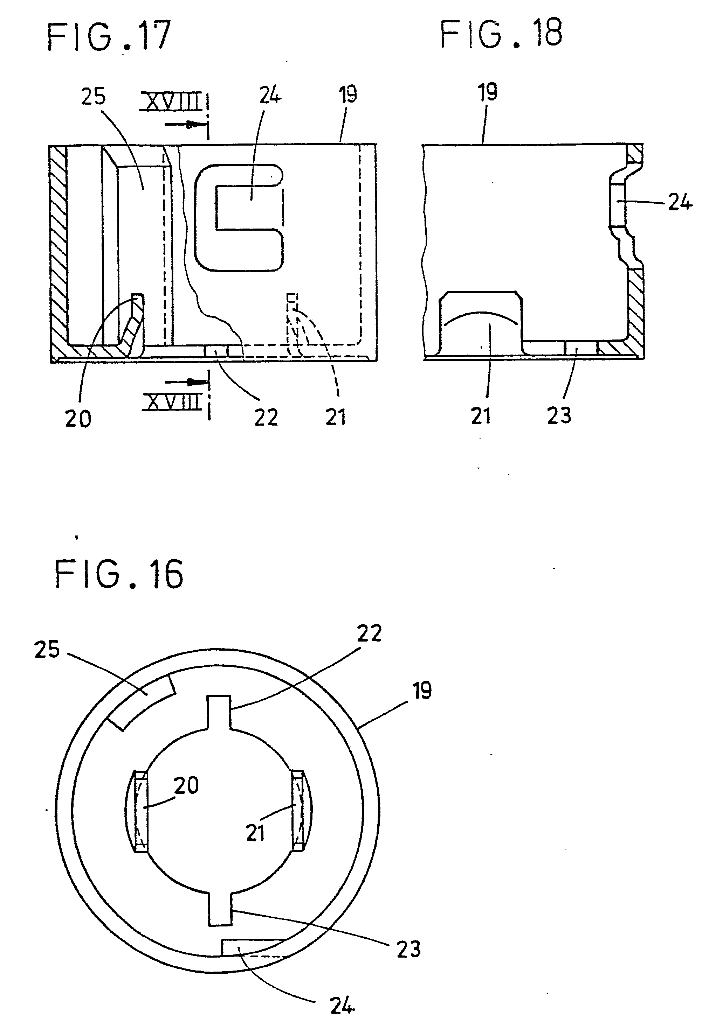

Fig. 16 eine Draufsicht auf die Kunststoff-Fassung in stark vergrößertem Maßstab,

Fig. 17 eine Seitenansicht der Kunststoff-Fassung, teilweise aufgebrochen,

Fig. 18 den Schnitt nach der Linie XVIII-XVIII in Fig. 17,

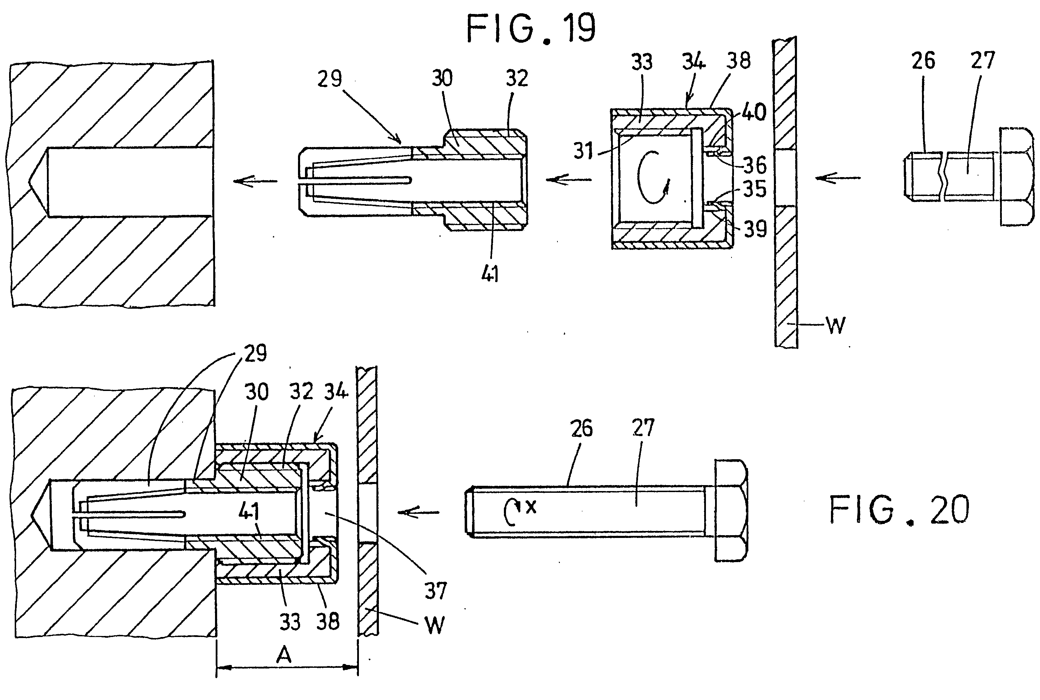

Fig. 19 die zweite Ausführungsform der Vorrichtung in vergrößerter Schnittdarstellung vor der Montage,

Fig. 20 eine Schnittdarstellung wie Fig. 19, jedoch mit bereits aufgebrachter Distanzscheibe,

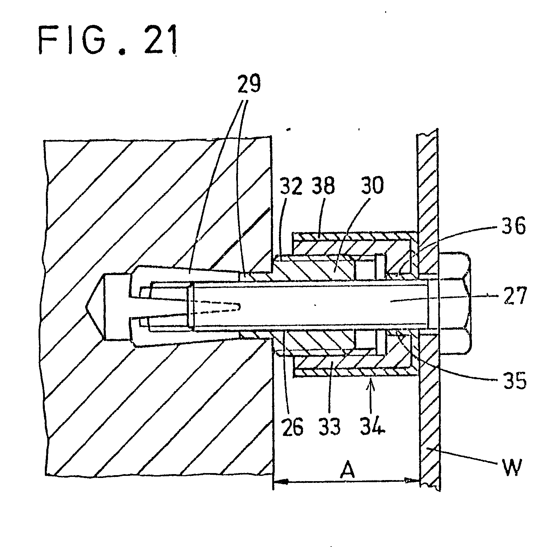

Fig. 21 die zu verbindenden Teile gemäß Fig. 19, jedoch nach der Montage,

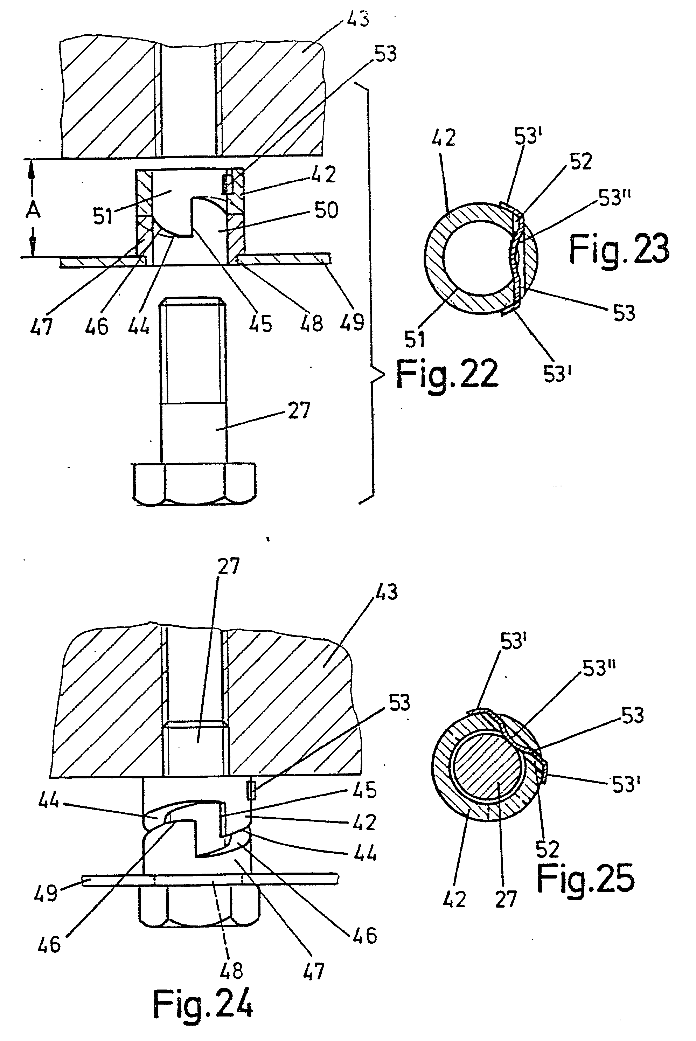

Fig. 22 einen Längsschnitt durch die dritte Ausführungsform vor Eindrehen der Verbindungsschraube,

Fig. 23 einen Querschnitt durch die Distanzscheibe im Bereich der den Reibschluß bringenden Blattfeder,

Fig. 24 teils im Schnitt, teils in Ansicht die Vorrichtung in Spannstellung,

Fig. 25 einen entsprechenden Querschnitt durch die Vorrichtung im Bereich der Blattfeder,

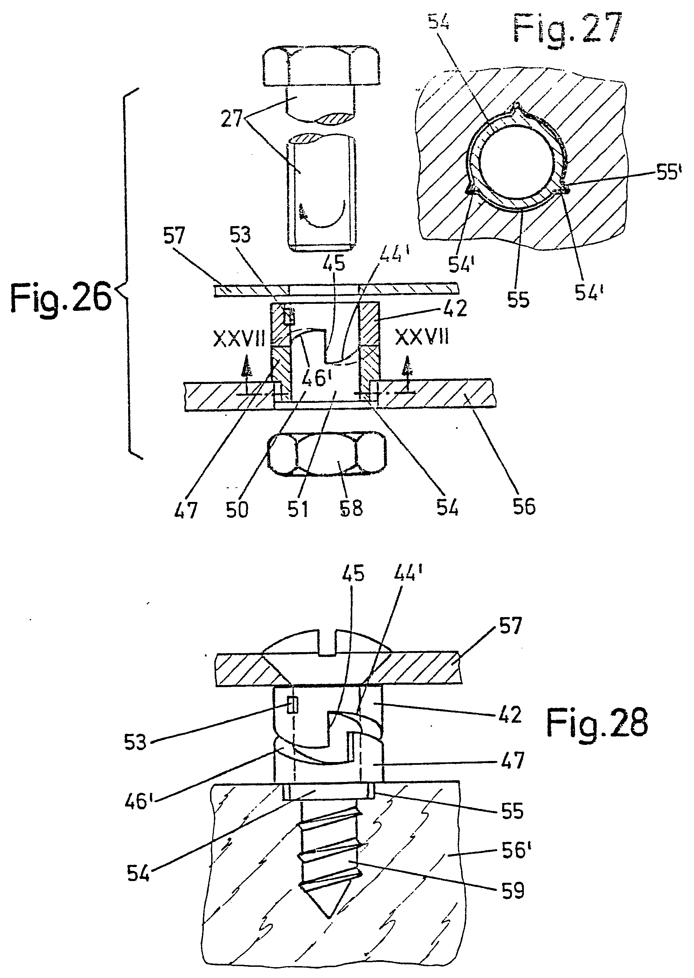

Fig. 26 einen Längsschnitt durch die Vorrichtung gemäß der vierten Ausführungsform vor dem Einsetzen der Verbindungsschraube,

Fig. 27 einen Querschnitt nach der Linie XXVII-XXVII in Fig. 26,

Fig. 28 die Vorrichtung gemäß der fünften Ausführungsform in ihrer Spannstellung,

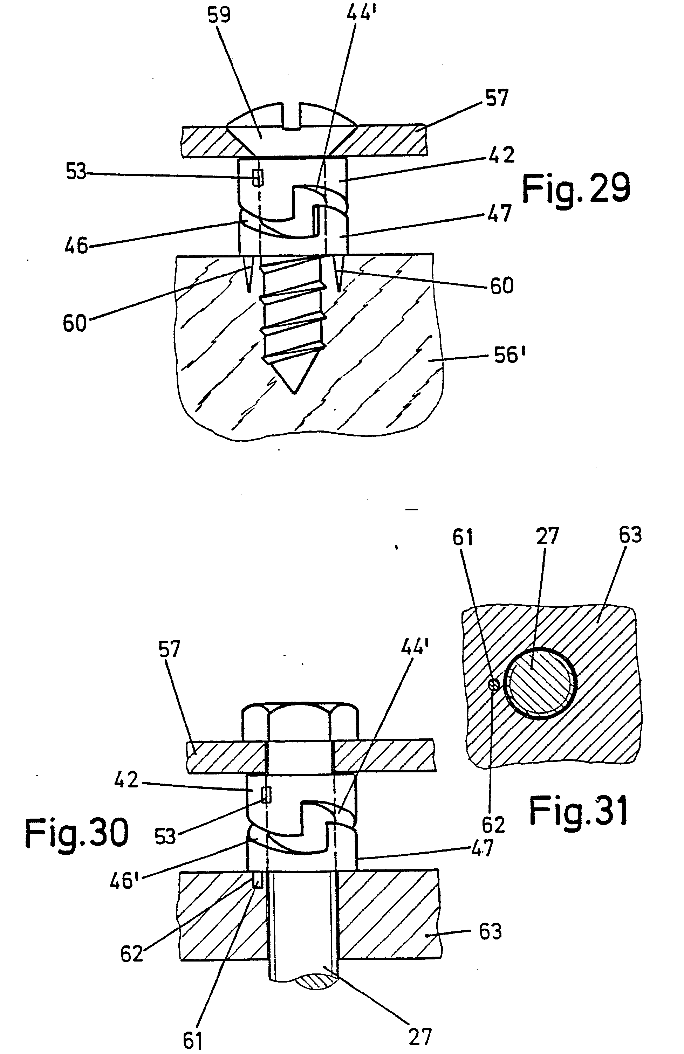

Fig. 29 die Vorrichtung gemäß der sechsten Ausführungsform in ihrer Spannstellung, wobei die die Gegensteigungs-Stützflächen aufweisende Büchse mittels Zacken am Bauteil drehgesichert ist,

Fig. 30 die siebte Ausführungsform der Vorrichtung, bei welcher die Drehsicherung der Büchse mittels eines ringflächenseitig vorstehenden Zapfens erfolgt,

Fig. 31 einen Querschnitt durch die Vorrichtung auf Höhe des Zapfens,

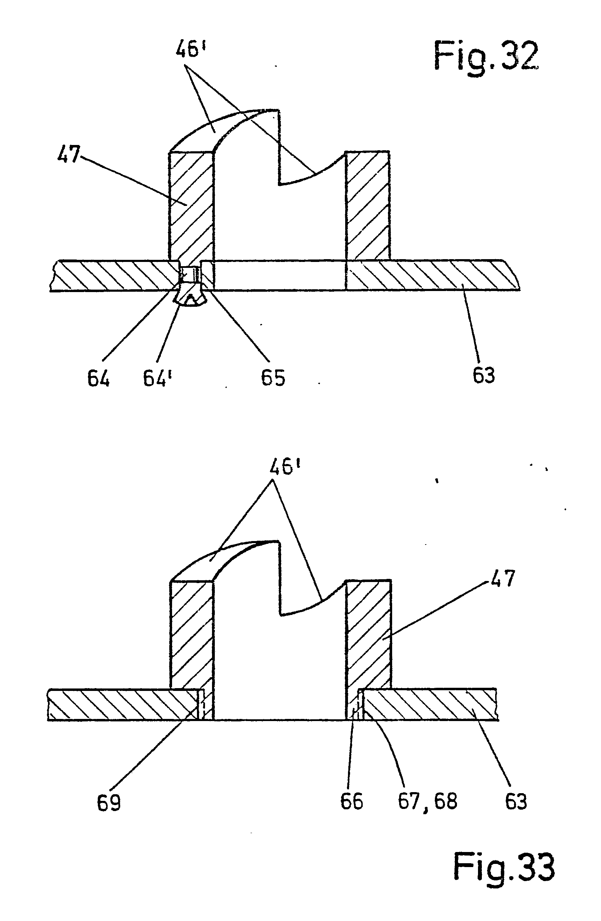

Fig. 32 die achte Ausführungsform der Vorrichtung im Schnitt, wobei die Drehsicherung zwischen Büchse und Bauteil durch einen von der Ringfläche vorstehenden Zapfen erfolgt, der seinerseits mit dem Loch des Bauteils verklipst ist,

Fig. 33 die neunte Ausführungsform der Vorrichtung im Schnitt, bei welcher von der Ringfläche der Büchse ein mit Außengewinde versehener Kragen ausgeht, der in ein Innengewinde des Bauteils eingeschraubt ist,

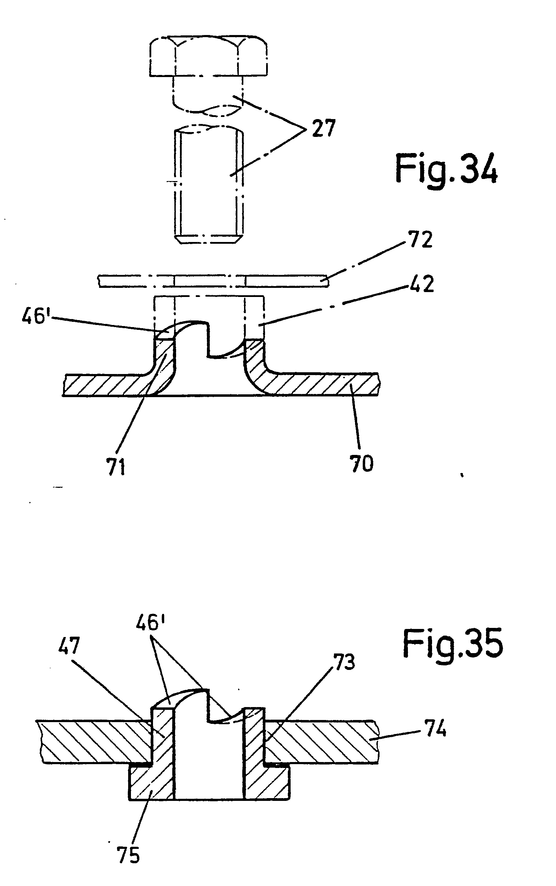

Fig. 34 die zehnte Ausführungsform der Vorrichtung, wobei die Gegensteigungs-Stützflächen an der Stirnseite eines aus dem Bauteil gedrückten Kragens vorgesehen sind,

Fig. 35 einen Längsschnitt durch die elfte Ausführungsform der Vorrichtung, bei welcher die Gegensteigungs-Stützflächen an einer in das Bauteil eingesteckten Büchse sitzen, deren Bund am Bauteil festgelegt ist,

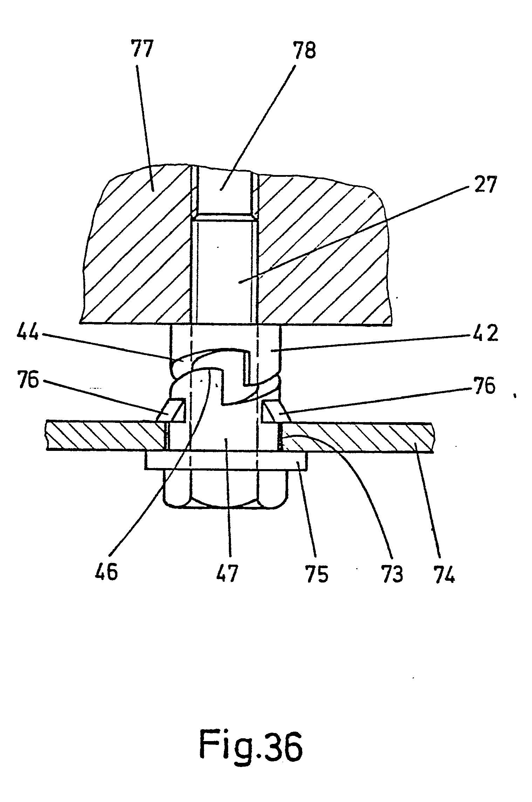

Fig. 36 die zwölfte Ausführungsform der Vorrichtung, bei welcher die Büchse mit dem Bauteil verklipst ist,

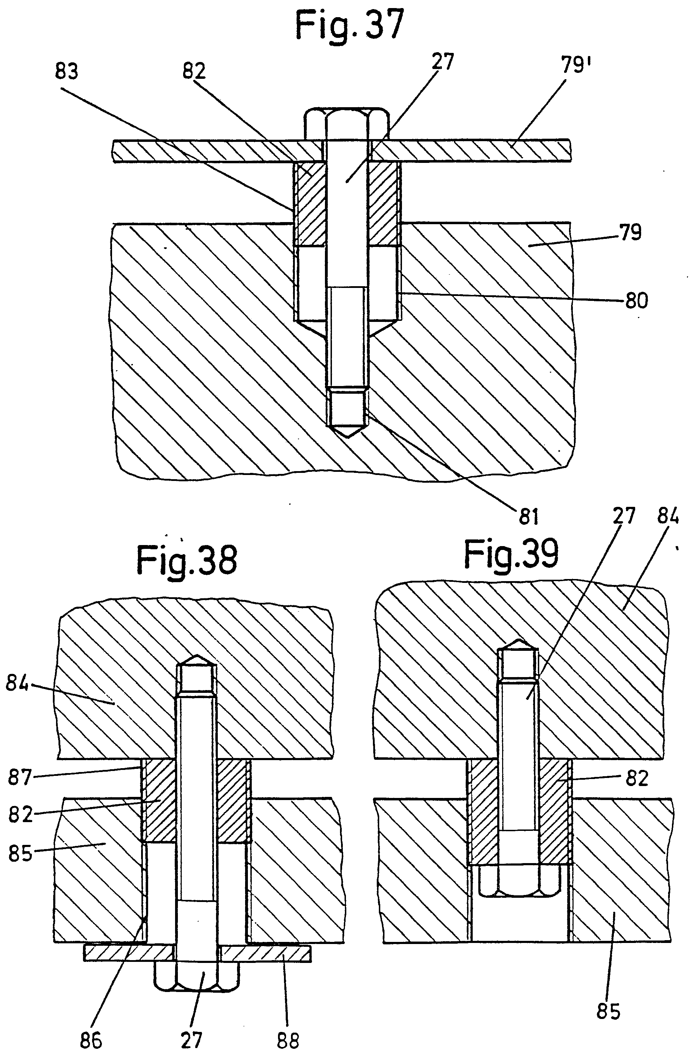

Fig. 37 die dreizehnte Ausführungsform der Vorrichtung im Längsschnitt in Spannstellung,

Fig. 38 die vierzehnte Ausführungsform der Vorrichtung, ebenfalls im Längsschnitt,

Fig. 39 die fünfzehnte Ausführungsform der die Spannstellung einnehmenden Vorrichtung,

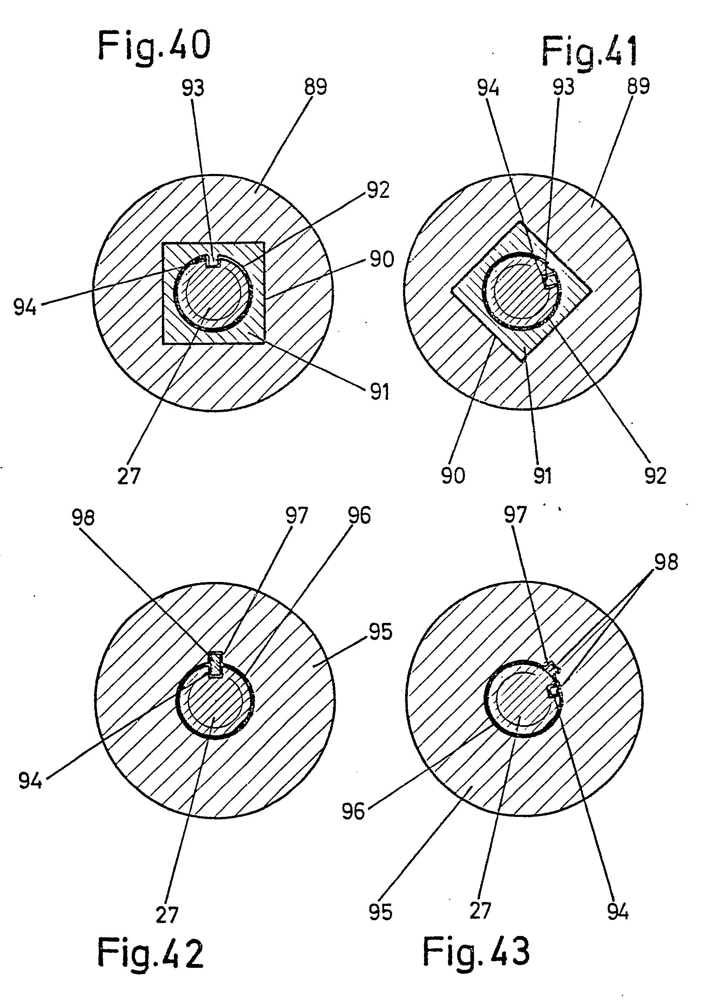

Fig. 40 einen Querschnitt durch die Vorrichtung gemäß der sechszehnten Ausführungsform, bei welcher die Distanzscheibe formschlüssig mit der Verbindungsschraube gekuppelt ist,

Fig. 41 eine der Fig. 40 entsprechende Darstellung, jedoch bei aufgelöstem Formschluß,

Fig. 42 einen Querschnitt durch die Vorrichtung gemäß der siebzehnten Ausführungsform mit einem Kupplungsstück zwischen Distanzscheibe und Verbindungsschraube und

Fig. 43 die der Fig. 42 entsprechende Darstellung nach Auflösen des Formschlusses.

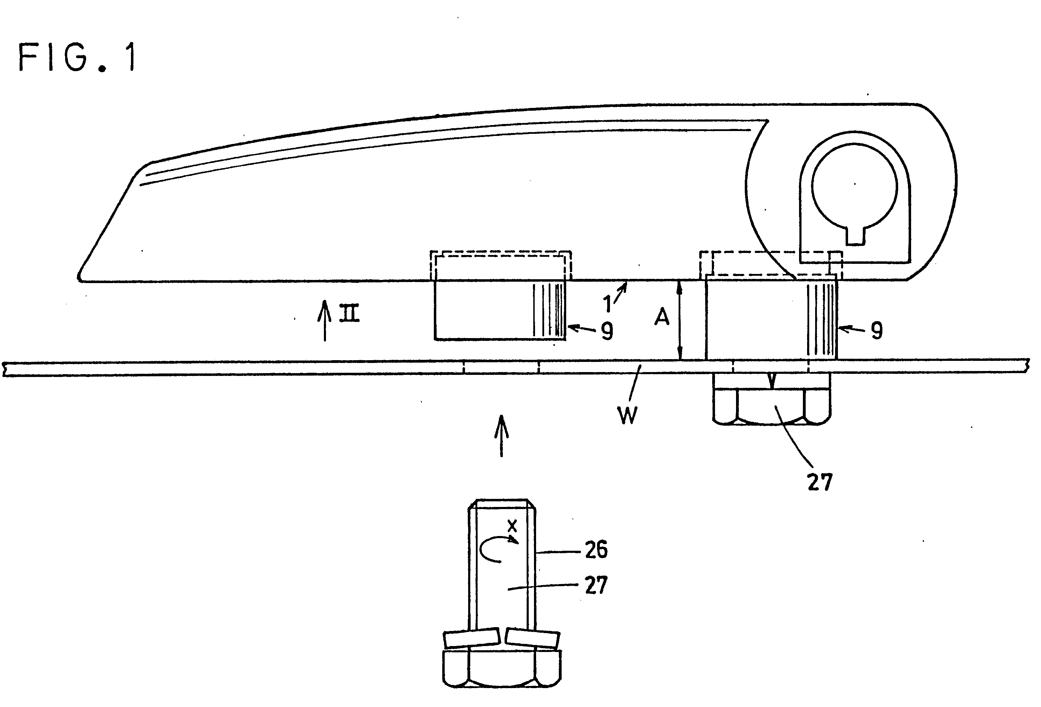

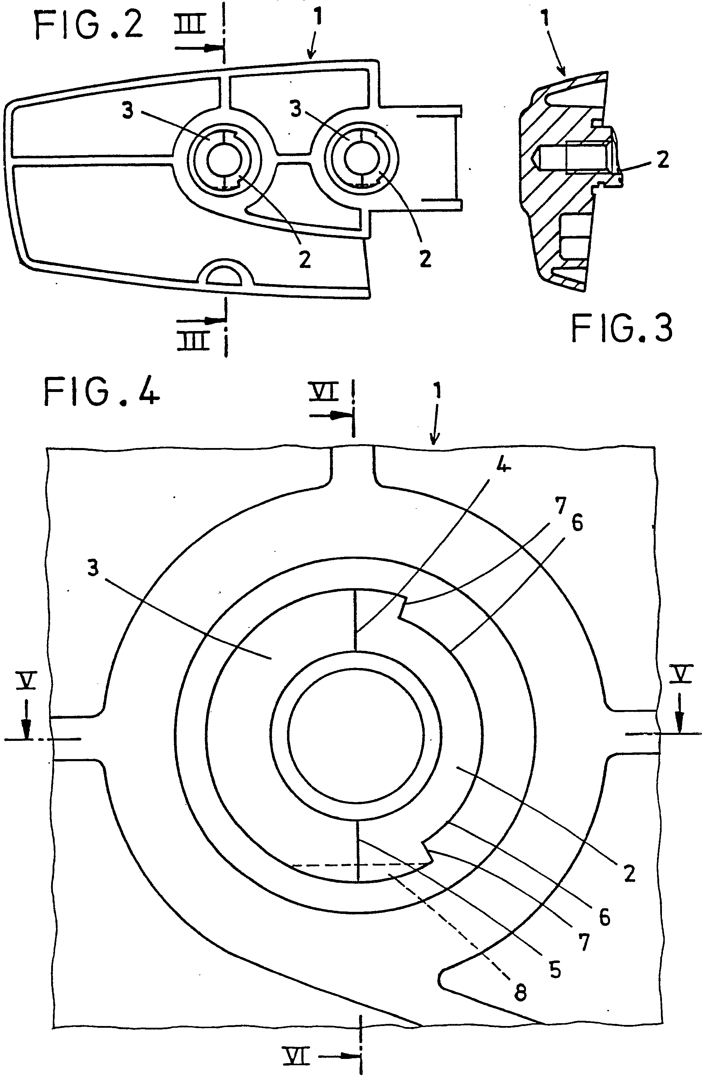

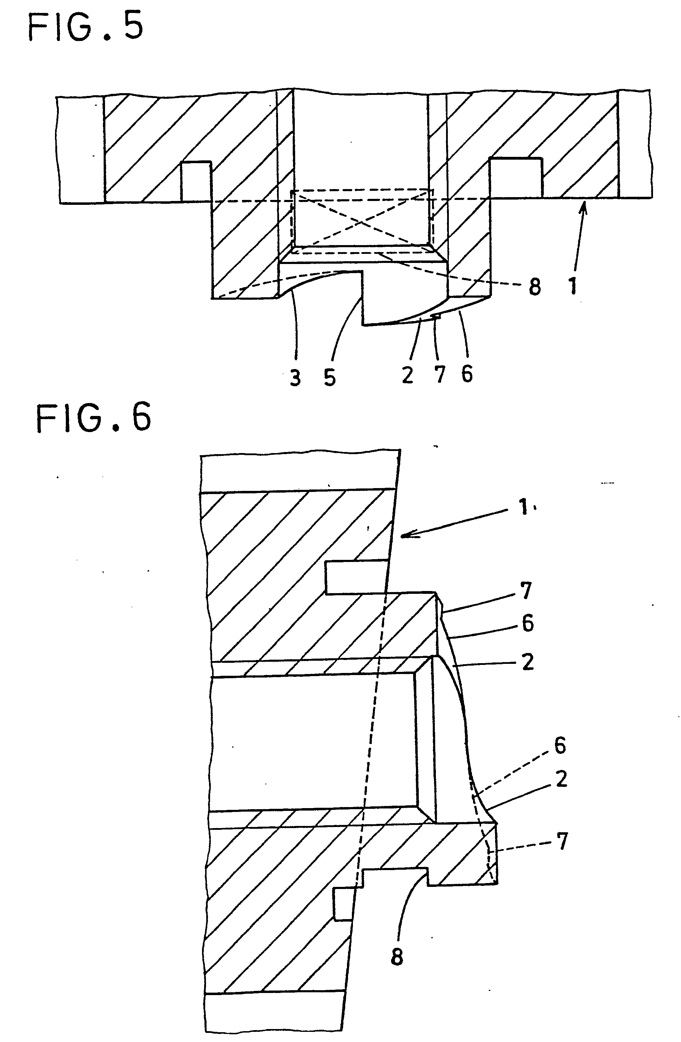

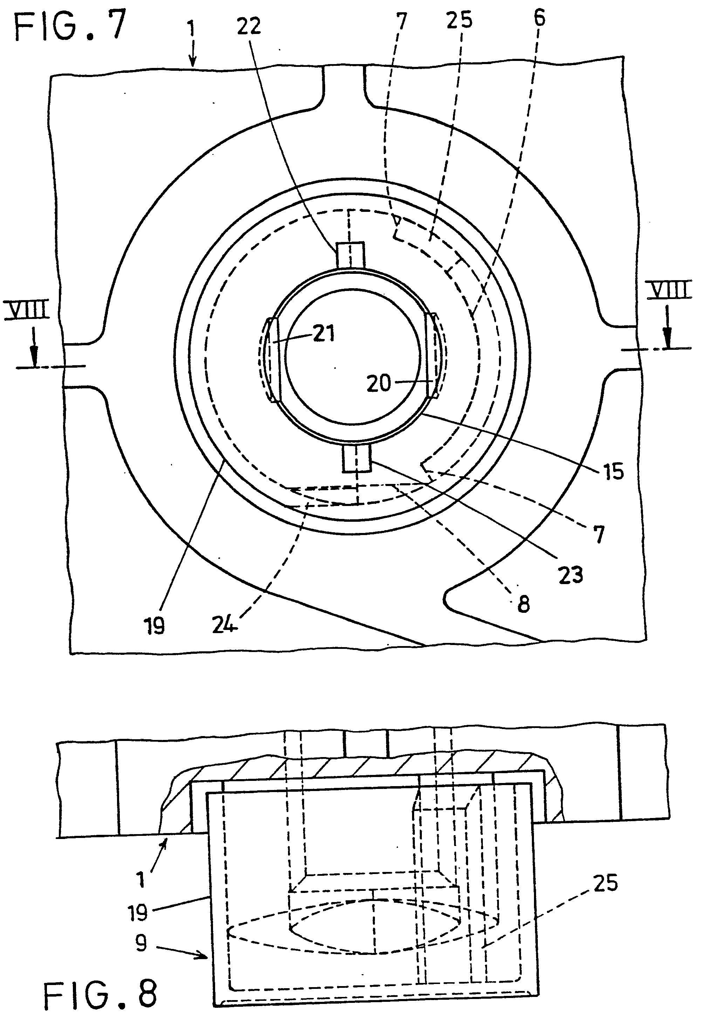

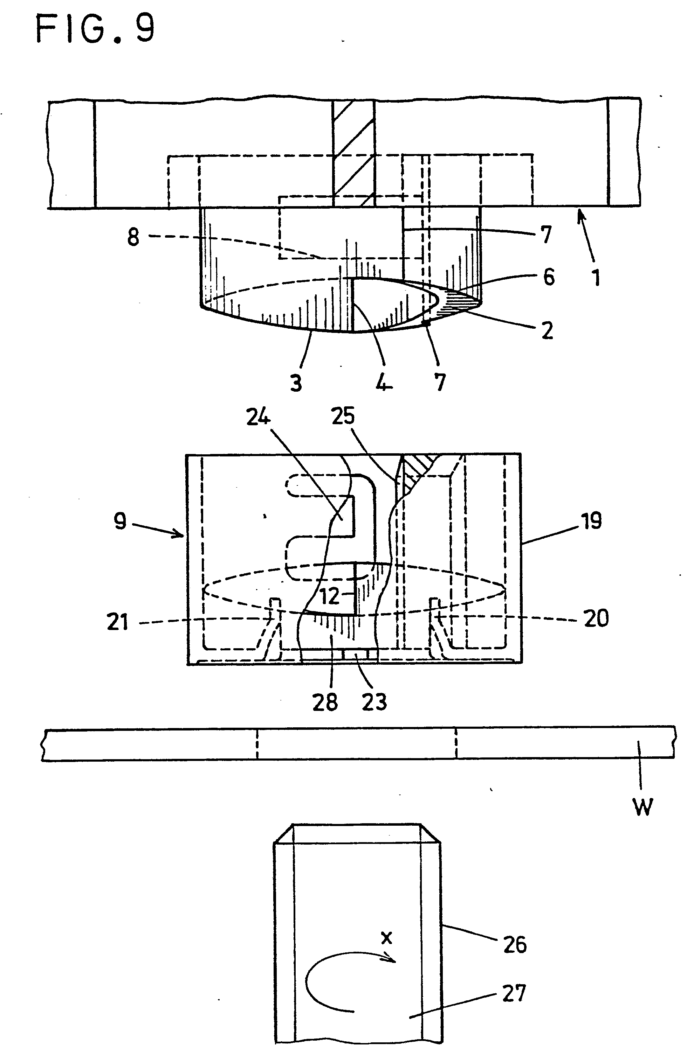

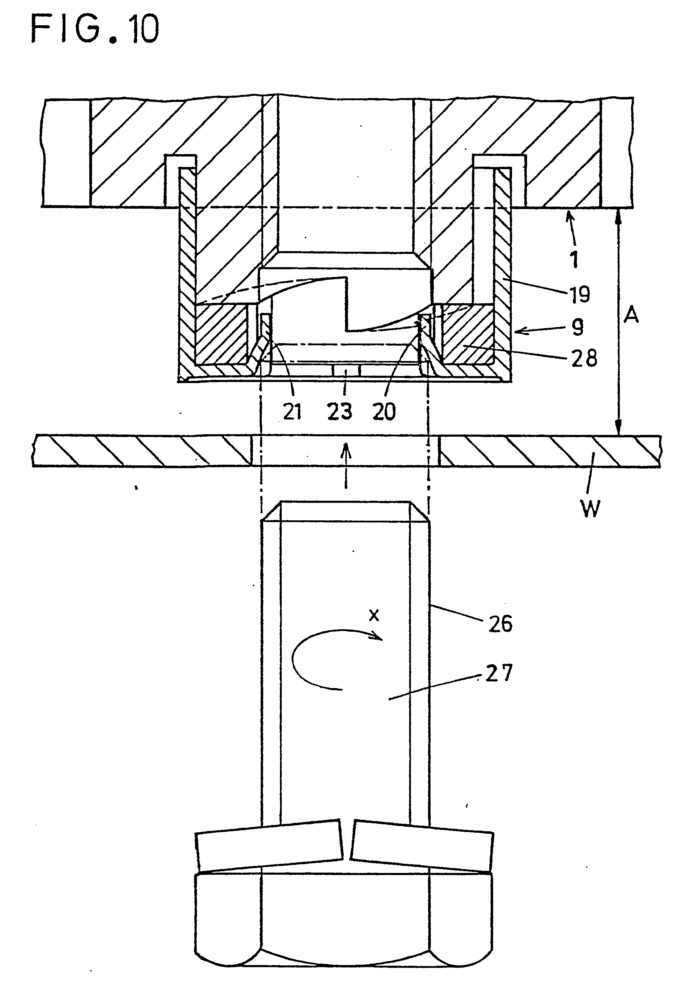

Gemäß dem ersten Ausführungsbeispiel, dargestellt in den Fig. 1-18, gehen von der Rückseite eines scharnierartigen Bauteils 1 zwei materialeinheitlich angeformte Kragen aus, die stirnseitig je zwei wendelgangförmige, linkssteigende Gegensteigungs-Stützflächen 2, 3 bilden. Die Kragen umgehen ein Innengewinde des Bauteils 1. Die beiden Gegensteigungs-Stützflächen 2 und 3 sind durch diametral liegende Stufen 4 und 5 begrenzt. Die Gegensteigungs-Stützfläche 2 formt durch eine halbkreisförmige Aussparung Radialstufen 6, 7 zur Begrenzung der Drehbewegung einer Distanzscheibe 9. Ferner ist an ihr eine Schulter 8 für das Hintergreifen einer federnden Zunge 24 der Distanzscheibe 9 vorgesehen.

Die Distanzscheibe 9 besitzt ebenfalls zwei wendelgangförmig liegende Steigungs-Stützflächen 10 und 11, welche durch diametral liegende die Stufen 12 und 13 begrenzt sind. Die Steigungs-Stützflächen 10 und 11 befinden sich auf der Breitseite B der Distanzscheibe 9 und sind mit radial stehenden Zahnstufen 14 versehen. Die unterschiedlich langen Flanken jeder Zahnstufe 14 schließen einen Winkel von ca. 90° ein. Die Distanzscheibe 9 besitzt ferner eine Innenöffnung 15 mit zwei gegenüberliegenden Ausbuchtungen 16 und 17 zur Aufnahme der Kragenabschnitte 20 und 21 einer Kunststoff-Fassung 19. Am äußeren Umfang der Distanzscheibe 9 ist zwischen zwei Zahnstufen 14 eine Radialausnehmung 18 vorgesehen zur Aufnahme eines Drehanschlags 25 der Kunststoff-Fassung 19. Letztere ist topfförmig gestaltet und bildet bodenseitig zwei einwärts gerichtete Kragenabschnitte 20 und 21. Diese Kragenabschnitte 20 und 21 erzielen den Reibschluß zur Mantelfläche 26 der in Schraubeneindrehrichtung × eingeführten Verbindungsschraube 27.

Die Kunststoff-Fassung 19 umgibt eine Metallscheibe 28 und ist nach ihrem Aufstecken auf die Gegensteigungs-Stützflächen 2, 3 durch die die Schulter 8 hintergreifende Zunge 24 gegen Herabfallen gesichert. Zusätzlich besitzt die Kunststoff-Fassung 19 einen Drehanschlag 25, welcher sich über die ganze Topfhöhe erstreckt. Dieser Drehanschlag 25 tritt in die Radialausnehmung 18 der Metallscheibe 28 der Distanzscheibe 9 ein und verbindet diese beiden Teile undrehbar zueinander. Die Montage wird wie folgt durchgeführt: Nach Aufsetzen der Distanzscheiben 9 auf die Gegensteigungs-Stützflächen 2, 3 ausbildenden Kragen befinden sich die Distanzscheiben 9 in einer solchen Stellung, in welcher die Radialstufen 4, 5 der Gegensteigungs-Stützfläche 4, 5 und Radialstufen 12, 13 der Distanzscheibe 9 gegeneinandertreten. Die Gegensteigungs-Stützflächen 2, 3 und Stützflächen 10, 11 liegen dann auf ganzer Länge flächig aufeinander, so daß dann noch ein Abstand zwischen der Bodenwand der Kunststoff-Fassung 19 und Befestigungswand W für das Bauteil 1 vorliegt. Das bedeutet, daß die Distanzscheibe 9 im Abstandsraum A zwischen Bauteil 1 und Befestigungswand W liegt.

Nun erfolgt das Eindrehen der miteinem rechtsgängigen Gewinde versehenen Verbindungsschraube 27. Diese nimmt dabei zufolge Reibschluß zwischen ihrer Mantelfläche 26 und den Kragenabschnitten 20, 21 die Distanzscheibe 9 in Schraubeneindrehrichtung x mit, und zufolge der gegenläufigen Steigungs-Stützflächen 10, 11 der Distanzscheibe 9 erfolgt eine Abspreizung der Distanzscheibe 9 von dem Kragen, bis der Topfboden gegen die Befestigungswand W zur Anlage kommt. Dann kann die Verspannung erfolgen, wobei die Distanzscheibe die Spannkraft der Schraube aufnimmt.

Gemäß dem zweiten Ausführungsbeispiel, dargestellt in den Fig. 19-21 befinden sich am Kopf 30 eines Dübels 29 die Gegensteigungs-Stützflächen. Letztere werden von einem mantelwandseitigen Gewinde 32 (Linksgewinde) gebildet.

Die Distanzscheibe 34 besitzt eine Metallscheibe 33. Diese weist eine Innenöffnung 37 mit zwei gegenüberliegenden Ausbuchtungen 39 und 40 zur Aufnahme der Kragenabschnitte 35 und 36 einer die Metallscheibe 33 umgreifenden Kunststoff-Fassung 38 auf.

Die Metallscheibe 33 besitzt die Steigungs-Stützflächen an der Innenhöhlung in Form eines Innengewindes 31 (Linksgewinde).

Die Kunststoff-Fassung 38 ist topfförmig gestaltet und bildet bodenseitig zwei einwärts gerichtete Kragenabschnitte 35 und 36. Diese Kragenabschnitte 35 und 36 erzielen den Reibschluß zur Mantelfläche 26 der in Schraubeneindrehrichtung x eingeführten Verbindungsschraube 27. Letztere besitzt Rechtsgewinde. Sie wird in das Innengewinde 41 des Dübels 29 eingeschraubt.

Diese Schraubverbindung wird wie folgt hergestellt : Zunächst wird der Dübel 29 in eine entsprechende Bohrung eines Bauteils eingesteckt. Der Kopf 30 des Dübels 29 bildet mit seinem mantelwandseitigen Gewinde 32 die Gegensteigungs-Stützflächen für die Steigungs-Stützflächen des Gewindes 31 der Distanzscheibe 34. Die Distanzscheibe 34 wird bis in die Stellung gemäß Fig. 20 aufgeschraubt, so daß zwischen dem Topfboden der Kunststoff-Fassung 34 und der Befestigungswand W ein Abstand verbleibt.

Nun wird die Verbindungsschraube 27 durch ein Loch in der Befestigungswand hindurchgeführt und in das Innengewinde 41 des Dübels 29 eingedreht.

Zufolge Reibschluß zwischen Mantelfläche 26 und Kragenabschnitte 35, 36 erfolgt eine Mitnahme der Distanzscheibe 34 in Schraubeneindrehrichtung x. Das entgegengesetzt gerichtete Gewinde zwischen Distanzscheibe 34 und Dübelkopf 30 führt dazu, daß due Distanzscheibe 34 in Richtung der Befestigungswand W verlagert wird und sich dort abstützt.

Die Distanzscheibe stellt somit das den Abstandsraum A überbrückende Widerlager für die Befestigungswand W dar.

Gemäß der in Fig. 22-25 aufgezeigten dritten Ausführungsform ist die Distanzscheibe 42 auf ihrer dem Bauteil 43 agekehrten Breitseite mit rechts ansteigenden Steigungs-Stützflächen 44 ausgestattet. Begrenzt werden diese durch zwei sich diametral gegenüberliegende Stufen 45. Den Steigungs-Stützflächen 44 liegen formpassend wendelgangförmige Gegensteigungs-Stützflächen 46 gegenüber. Dieselben befinden sich an der zugekehrten Breitseite einer Büchse 47. Ein konzentrischer Kragen 48 der gegenüberliegenden Ringfläche ist mit dem anderen Bauteil 49 drehfest verbunden. Die Durchtrittsbohrung 50 der Büchse 47 fluchtet mit der Innenöffnung 51 der Distanzscheibe 42.

Von der dem Bauteil 43 zugekehrten Breitseite der Distanzscheibe 42 geht ein sekantenförmig verlaufender Kanal 52 aus. In diesen ist eine Blattfeder 53 eingesetzt. Deren Enden 53' sind abgewinkelt und liegen an der Mantelfläche der Distanzscheibe 42 an. Der Mittelabschnitt 53" der Blattfeder 53 verläuft dagegen in Einwärtsrichtung gewölbt und tangiert die Innenöffnung 51 der Distanzscheibe 42. Sie liegt damit im Durchgangsbereich der Verbindungsschraube 27. Vor dem Eindrehen derselben nehmen die Teile der Vorrichtung die in Fig. 22 veranschaulichte Lage ein. Wird nun die Verbindungsschraube 27 eingesteckt, so gelangt deren Mantelfläche in Reibschluß zur Blattfeder 53. Beim Einschrauben der Verbindungsschraube, welche ein Rechtsgewinde aufweist, erfolgt eine zwangsläufige Mitnahme der Distanzscheibe 42 in gleicher Drehrichtung.

Zufolge der Rechtssteigung der Steigungs-Stützflächen 44 und Gegensteigungs-Stützflächen 46 wird aus der Drehung eine Axialverlagerung der Distanzscheibe 42 abgeleitet, wobei deren dem Bauteil 43 zugekehrte Breitseite in Anlage zum Bauteil 43 gelangt, vergl. Fig. 24. Es erfolgt dann keine weitere Mitnahme der Distanzscheibe 42 mehr, und die Verbindungsschraube 27 kann voll eingedreht werden unter Erzielung der Verspannung. Auch bei dieser Ausführungsform können die entsprechenden Steigungsflächen 44, 46 mit einer Verzahnung versehen sein.

Gemäß der in Fig. 26 und 27 aufgezeigten vierten Ausführungsform besitzen die Gegensteigungs-Stützflächen 46' eine Linkssteigung. Die in Eingriff zu ihnen tretenden Steigungs-Stützflächen 44' haben demgemäß die gleiche Steigung. Auch dort ist die Distanzscheibe 47 mit einer einen Reibschluß bringenden Blattfeder 53 ausgestattet. Von der Büchse 47 geht ein Zapfen 54 aus. Letzterer ist als konzentrisch zur Längsachse der Büchse verlaufender Kragen gestaltet. An seinem Außenumfang besitzt der Zapfen 54 drei in gleicher Winkelverteilung angeordnete vorstehende Rippen 54', welche in entsprechende Nuten 55' des Loches 55 des Bauteils 56 eingreifen. Auf diese Weise ist eine Drehsicherung der Büchse 47 erzielt. Wird nun die Verbindungsschraube 27 unter Durchsetzen eines Loches des Bauteils 57 eingesteckt und zufolge ihres Rechtsgewindes in Pfeilrichtung verdreht, so wird hierdurch die Distanzscheibe 42 mitgeschleppt, wobei zufolge der linksgängigen Steigungsflächen 44', 46' eine Axialverlagerung der Distanzscheibe 42 stattfindet, bis diese in ihre Abstützstellung zum Bauteil 57 tritt. Es kann nun auf das das Bauteil 56 überragende Ende der Verbindungsschraube 27 eine Mutter 58 aufgedreht werden, um die Bauteile 56, 57 gegeneinander zu verspannen unter Zwischenlage der Distanzscheibe 42.

Die in Fig. 28 veranschaulichte fünfte Ausführungsform besitzt ähnlichen Aufbau wie die vorhergehende Ausgestaltung. Gleiche Bauteile tragen daher gleiche Bezugsziffern. Bezüglich der Verbindungsschraube handelt es sich um eine Holzschraube 59 mit rechts steigendem Gewinde. Bei ihrem Eindrehen wird die Distanzscheibe 42 in die Abstützstellung verlagert, während der mit Gewinde versehene Schaft in das aus Holz bestehende Bauteil 56' eingreift. Der Reibschluß wird ebenfalls über eine Blattfeder 53 erzeugt, die gegen die Mantelfläche der Verbindungsschraube 59 drückt.

Die sechste Ausführungsform gemäß Fig. 29 entspricht weitgehend der in Fig. 28 veranschaulichten Ausführungsform. Die Drehsicherung der Büchse 47 geschieht nun über als Zacken 60 ausgebildete Zapfen, die von der Ringfläche der Büchse 47 vorstehen, in gleicher Winkelverteilung vorgesehen sind und in das aus Holz bestehende Bauteil 56' eintreten zwecks Erzielung der Drehsicherung.

In der in Fig. 30 und 31 veranschaulichten siebten Ausführungsform geht von der Ringfläche der Büchse 47 ein Zapfen 61 aus, der formpassend in ein Loch 62 des Bauteils 63 eingreift. Wird die Verbindungsschraube 27 von dem Bauteil 57 her eingesetzt und verdreht, so erfolgt zwangsläufig die Mitnahme der Distanzscheibe 42 in entsprechende Richtung, wobei diese in ihre Abstützstellung gelangt. Auf das das Bauteil 63 überragende Ende der Verbindungsschraube 27 kann dann eine Mutter aufgedreht werden unter Verspannung der beiden Bauteile 57, 63 gegeneinander.

Gemäß der achten Ausführungsform in Fig. 32 geht von der dem Bauteil 63 zugekehrten Ringfläche der Büchse 47 ein Zapfen 64 aus. Letzterer greift in ein Loch 65 des Bauteils 63 ein. Hierbei besteht eine Klipsverbindung zwischen Zapfen 64 und Loch 65, wozu der Rastzapfen 64 einsteckseitig Auflaufschrägen 64' ausbildet.

Gemäß Fig. 33, welche die neunte Ausführungsform betrifft, geht von der Büchse 47 an der dem Bauteil 63 zugewendeten Ringfläche ein konzentrischer, als Kragen ausgebildeter Zapfen 66 aus. Dessen Außengewinde 67 tritt in Eingriff mit dem Innengewinde 68 des Loches 69 des Bauteils 63.

Bei der in Fig. 34 veranschaulichten zehnten Ausführungsform sind die Gegensteigungs-Stützflächen 46' an der Stirnseite eines aus dem Bauteil 70 gedrückten Kragens 71 gebildet. Letzterer wirkt zusammen mit der strichpunktiert veranschaulichten Distanzscheibe 42, welche wiederum von einer Verbindungsschraube 27 bis in die Abstützstellung mitgeschleppt wird. Auf das über das Bauteil 70 vorstehende Ende der Verbindungsschraube kann dann eine Mutter aufgeschraubt werden, um eine Verspannung mit dem anderen Bauteil 72 zu erhalten.

In Fig. 35, betreffend die elfte Ausführungsform, durchsetzt eine die Gegensteigungs-Stützflächen 46' ausbildende Büchse 47 ein Loch 73 des Bauteils 74. An der den Gegensteigungs-Stirnflächen gegenüberliegenden Seite formt die Büchse 47 einen Bund 75, der gegen die Unterseite des Bauteils 74 tritt und dort bspw. durch Schweißpunkte, Kleben etc. festgelegt ist.

Die in Fig. 36 veranschaulichte zwölfte Variante besitzt eine Büchse 47, die mit dem Loch 73 des Bauteils 74 verklipst ist. Hierzu gehen in Gegenüberlage vom Bund 75 Klipsvorsprünge 76 aus, die nach dem Einstecken der Büchse 47 gegen die Oberseite des Bauteils 74 treten und in Verbindung mit dem Bund 75 eine axiale Unverschieblichkeit der Büchse 47 bewirken. Die Gegensteigungs-Stützflächen 46 der Büchse 47 verlaufen rechtssteigend. Sie wirken zusammen mit den entsprechend verlaufenden Steigungs-Stützflächen 44 der Distanzscheibe 42. Da die Verbindungsschraube 27 ein Rechtsgewinde besitzt, wird bei ihrem Eindrehen die Distanzscheibe 42 mitgedreht einhergehend mit einer axialen Verlagerung derselben derart, daß diese in die Abstands-Stützstellung zum gegenüberliegenden Bauteil 77 tritt, welches zur Aufnahme der Verbindungsschraube 27 ein entsprechend gestaltetes Innengewinde 78 ausbildet.

Bei der in Fig. 37 dargestellten dreizehnten Ausführungsform geht es darum, zwei Bauteile 79 und 79' mit Distanz gegeneinander zu verspannen. Das eine Bauteil 79 besitzt eine Gewindebohrung 80 mit linksgängigen Gegensteigungs-Stützflächen. Axial zu dieser Gewindebohrung 80 erstreckt sich eine Gewindebohrung 81 mit kleinerem Gewindedurchmesser. Diese Gewindebohrung ist mit Rechtsgewinde versehen entsprechend dem Außengewinde der Verbindungsschraube 27. Letztere durchsetzt reibungsschlüssig eine Distanzscheibe 82, welche mantelseitig mit einem linksgängigen, die Steigungs-Stützflächen ausbildenden Außengewinde 83 versehen ist. Die Länge der Distanzscheibe 82 ist größer als das lichte Abstandsmaß zwischen den Bauteilen 79 und 79', so daß die Distanzscheibe 82 mit einem Teil ihrer Länge in die Gewindebohrung 80 eintritt. Wird die Verbindungsschraube 27 entsprechend ihrer Gewindesteigung eingeschraubt, so hat dieses ein Mitnehmen der Distanzscheibe 82 zur Folge. Zufolge des linksgewindes verlagert sich die Distanzscheibe 82 bis zur Anlage zum Bauteil 79'. Dann übernimmt die Distanzscheibe 82 beim weiteren Einschrauben die Abstützfunktion.

Gemäß Fig. 38, welche das vierzehnte Ausführungsbeispiel betrifft, werden ebenfalls zwei Bauteile 84 und 85 mit Distanz zueinander verspannt. Das eine Bauteil 85 weist eine durchgehende Gewindebohrung 86 mit Rechtsgewinde auf, welches die Gegensteigungs-Stützflächen bildet. In die Gewindebohrung 86 greift das Außengewinde 87 der Distanzscheibe 82 ein. Das Außengewinde 87 ist demgemäß auch rechts steigend. Die die Distanzscheibe 82 reibungsschlüssig durchsetzende Verbindungsschraube 27 nimmt bei ihrem Eindrehen die Distanzscheibe 82 in Einschraubrichtung mit, so daß diese sich an der zugekehrten Fläche des Bauteils 84 abstützt. Die Verbindungsschraube durchsetzt ferner eine Unterlegscheibe 88, auf welche der Schraubenkopf der Verbindungsschraube drückt. Auch bei dieser Ausführungsform ist die Länge der Distanzscheibe 82 größer als das lichte Abstandsmaß zwischen den Bauteilen 84, 85. Das Bauteil 84 bildet zur Aufnahme der Verbindungsschraube 27 eine Gewindebohrung mit rechtsgängigem Innengewinde aus.

Bei der in Fig. 39 dargestellten fünfzehnten Ausführungsform, welche weitgehend der vierzehnten Ausführungsform entspricht, tragen gleiche Bauteile gleiche Bezugsziffern. Der Kopf der Verbindungsschraube 27 stützt sich nun unmittelbar an der Stirnfläche der Distanzscheibe 82 ab. Die Schraubenspannkraft wird demgemäß über die Steigungs-Stützflächen übertragen.

In den Fig. 40 und 41, betreffend die sechzehnte Ausführungsform, besitzt die Distanzscheibe 89 mittig eine quadratische Öffnung 90, in welche passend ein aus Kunststoff bestehendes Formstück 91 eingesetzt ist. Dieses enthält eine Durchtrittsbohrung 92 für die Verbindungsschraube 27. In die Durchtrittsbohrung 92 ragt eine materialeinheitlich vom Formstück ausgehende Rippe 93, die formpassend in eine Längsnut 94 der Verbindungsschraube 27 eingreift. Auf diese Weise wird bei Drehung der Verbindungsschraube 27 die Distanzscheibe 89 bis in ihre Abstützstellung mitgeschleppt. Die Distanzscheibe 89 bleibt stehen und die Verbindungsschraube 27 verdreht sich relativ zu ihr, wobei die Rippe 93 von der entsprechenden Längsnutrandkante abgeschert wird, vergl. Fig. 41.

Die in den Fig. 42 und 43 veranschaulichte siebzehnte Ausführungsform beinhaltet eine Distanzscheibe 95, deren Durchtrittsöffnung 96 eine radial ausgerichtete Nut 97 ausbildet. In diese tritt ein Kupplungsstück 98 mit einer Randkante ein. Die gegenüberliegende Randkante ragt dagegen in die Längsnut 94 der Verbindungsschraube 27 unter Erzielung einer formschlüssigen Verbindung. Wird durch Drehen der Verbindungsschraube die Distanzscheibe 95 in die Abstützstellung gebracht, so wird bei weiterer Drehung der Verbindungsschraube 27 das Kupplungsstück 98 unter Auflösen des Formschlusses zertrennt, siehe Fig. 43.

## Patentansprüche

1. Vorrichtung zum verspannenden Verbinden von mit Abstand zueinander liegenden Bauteilen mittels Verbindungsschraube und mittels im Abstandsraum angeordneter, sich mit der äußeren Breitseite an dem einen Bauteil abstützender Distanzscheibe, welche mit wendelgangförmig liegenden Steigungs-Stützflächen ausgestattet ist, denen formpassende wendelförmige, dem anderen Bauteil zugeordnete Gegensteigungs-Stützflächen gegenüberliegen und wobei die Drehung der Stützflächen zueinander das eingenommene Axialmaß bestimmt, dadurch gekennzeichnet, daß die Distanzscheibe (9, 34, 42, 82, 89, 95) durch Verbindung zur Mantelfläche der Verbindungsschraube (27, 59) in die Abstützstellung mitgeschleppt ist.

2. Vorrichtung nach Anspruch 1, dadurch gekennzeichnet, daß die Verbindung durch Reibschluß erzielt ist.

3. Vorrichtung nach Anspruch 2, dadurch gekennzeichnet, daß die Distanzscheibe (9, 34) aus einer kunststoffgefaßten Metallscheibe (28 bzw. 33) besteht, deren Kunststoff-Fassung (19 bzw. 38) mit einwärts gerichteten Kragenabschnitten (20, 21 bzw. 35, 36) den Reibschluß zur Mantelfläche (26) der Verbindungsschraube (27) bildet.

4. Vorrichtung nach Anspruch 1, dadurch gekennzeichnet, daß die Gegensteigungs-Stützflächen am Kopf (30) eines Dübels (29) vorgesehen sind.

5. Vorrichtung nach einem oder mehreren der vorhergehenden Ansprüche, dadurch gekennzeichnet, daß die Gegensteigungs-Stützflächen von einem mantelwandseitigen Gewinde (32) des Dübelkopfes (30) gebildet sind.

6. Vorrichtung nach einem oder mehreren der vorhergehenden Ansprüche, dadurch gekennzeichnet, daß die Kunststoff-Fassung (19) eine federnde Zunge (24) ausbildet, die hinter eine Schulter (8) des mit den Gegensteigungs-Stützflächen (2, 3) ausgestatteten Bauteils (1) tritt.

7. Vorrichtung nach einem oder mehreren der vorhergehenden Ansprüche, gekennzeichnet durch einen Drehanschlag (25) der Distanzscheibe (9).

8. Vorrichtung nach einem oder mehreren der vorhergehenden Ansprüche, dadurch gekennzeichnet, daß die Gegensteigungs-Stützflächen (46') an der Stirnseite eines aus dem Bauteil (70) gedrückten Kragens (71) gebildet sind.

9. Vorrichtung nach einem oder mehreren der vorhergehenden Ansprüche, dadurch gekennzeichnet, daß die Gegensteigungs-Stützflächen (46, 46') an einer Büchse (47) angeordnet sind, die mittels eines von der bauteilseitigen Ringfläche vorstehenden Zapfens in einem Loch des Bauteils drehgesichert ist.

10. Vorrichtung nach einem oder mehreren der vorhergehenden Ansprüche, dadurch gekennzeichnet, daß der Reibschluß von einer der Distanzscheibe (42) sekantenförmig zugeordneten, die Innenöffnung (51) tangierenden Blattfeder (53) erzielt ist.

11. Vorrichtung nach einem oder mehreren der vorhergehenden Ansprüche, dadurch gekennzeichnet, daß die Blattfeder (53) von der Breitseite her in einen sekantenförmig verlaufenden Kanal (52) eingesetzt ist.

12. Vorrichtung nach einem oder mehreren der vorhergehenden Ansprüche, dadurch gekennzeichnet, daß die Distanzscheibe (89, 95) mittels eines auflösbaren Formschlusses zur Verbindungsschraube (27) in die Abstützstellung mitgeschleppt ist.

## Claims

1. Apparatus for the bracing connection of spaced structural elements by means of a connecting screw and by means of a spacer, which is arranged in the intermediate space, bears with the outer broad side against the one structural element and is equipped with helical thread-shaped pitched supporting surfaces, opposite which there are mating helical counter-pitched supporting surfaces assigned to the other structural element and in which arrangement the turning of the supporting surfaces with respect to each other determines the axial dimension assumed, characterized in that the spacer (9, 34, 42, 82, 89, 95) is carried along into the supporting position by connection to the circumferential surface of the connecting screw (27, 59).

2. Apparatus according to Claim 1, characterized in that the connection is achieved by frictional connection.

3. Apparatus according to Claim 2, characterized in that the spacer (9, 34) consists of a plastics-surrounded metal disc (28 and 33, respectively), the plastics surround (19 and 38, respectively) of which forms, with inwardly directed collar sections (20, 21 and 35, 36, respectively), the frictional connection with the circumferential surface (26) of the connecting screw (27).

4. Apparatus according to Claim 1, characterized in that the counter-pitched supporting surfaces are provided on the head (30) of a dowel (29).

5. Apparatus according to one or more of the preceding claims, characterized in that the counter-pitched supporting surfaces are formed by a circumferential thread (32) of the dowel head (30).

6. Apparatus according to one or more of the preceding claims, characterized in that the plastics surround (19) forms a resilient tongue (24), which enters behind a shoulder (8) of the structural element (1) equipped with the counter-pitched supporting surfaces (2, 3).

7. Apparatus according to one or more of the preceding claims, characterized by a rotary stop (25) of the spacer (9).

8. Apparatus according to one or more of the preceding claims, characterized in that the counter-pitched supporting surfaces (46') are formed on the face of a collar (71) pressed out from the structural element (70).

9. Apparatus according to one or more of the preceding claims, characterized in that the counter-pitched supported surfaces (46, 46') are arranged on a bush (47), which is rotatably secured in a hole of the structural element by means of a peg protruding from the annular surface of the element.

10. Apparatus according to one or more of the preceding claims, characterized in that the frictional connection is achieved by a leaf spring (53) assigned to the spacer (42) in secant form and forming a tangent to the inner opening (51).

11. Apparatus according to one or more of the preceding claims, characterized in that the leaf spring (53) is inserted, from the broad side, into a secant-shaped channel (52).

12. Apparatus according to one or more of the preceding claims, characterized in that the spacer (89, 95) is carried along into the supporting position by means of a releasable form connection with the connecting screw (27).

**Revendications**

1. Dispositif de liaison par serrage de parties de structure placées à distance les unes des autres, à l'aide d'une vis de liaison et d'une rondelle d'écartement disposée dans un espace d'écartement et s'appuyant par sa face large extérieure sur une des parties de la structure, la rondelle étant munie de surfaces d'appui inclinées en forme de rampes hélicoïdales qui font face à des surfaces d'appui à pentes opposées, prévues sur l'autre partie de structure et présentant une forme hélicoïdale correspondante et où la rotation relative des surfaces d'appui détermine la cote axiale obtenue, caractérisé en ce que la rondelle d'écartement (9, 34, 42, 82, 89, 95) est amenée en position d'appui par suite de sa liaison avec la surface d'enveloppe ou périphérique de la vis de liaison (27, 59).

2. Dispositif selon la revendication 1 caractérisé en ce que la liaison est obtenue par friction.

3. Dispositif selon la revendication 2, caractérisé en ce que la rondelle d'écartement (9, 34) se compose d'une rondelle métallique (28 ou 33) sertie ou revêtue de matière plastique et dont le sertissage de matière plastique (19 ou 38) forme avec des parties de collet dirigées vers l'intérieur (20, 21 ou 35, 36) la liaison frottante avec la surface d'enveloppe (26) de la vis de liaison (27).

4. Dispositif selon la revendication 1, caractérisé en ce que les surfaces d'appui d'inclinaisons opposées sont prévues sur la tête (30) d'un manchon (29).

5. Dispositif selon une ou plusieurs des revendications précédentes, caractérisé en ce que les surfaces d'appui d'inclinaisons opposées sont constituées par un filetage (32) dirigé du côté de la paroi d'enveloppe de la tête (30) du manchon.

6. Dispositif selon une ou plusieurs des revendications précédentes, caractérisé en ce que le sertissage en matière plastique (19) forme une languette élastique (24) qui vient se placer derrière un épaulement (8) de l'élément de structure (1) muni de surfaces d'appui d'inclinaisons opposées (2, 3).

7. Dispositif selon une ou plusieurs des renvendications précédentes, caractérisé par une butée rotative (25) de la rondelle d'écartement (9).

8. Dispositif selon une ou plusieurs des revendications précédentes, caractérisé en ce que les surfaces d'appui d'inclinaisons opposées (46') sont formées sur la face frontale d'un collet (71) venu de pressage sur la partie de structure (70).

9. Dispositif selon une ou plusieurs des revendications précédentes, caractérisé en ce que les surfaces d'appui d'inclinaisons opposées (46, 46') sont prévues sur un manchon (47) qui est immobilisé en rotation dans un trou de la partie de structure à l'aide d'un tenon faisant saillie à partir de la surface annulaire du côté de la partie de structure.

10. Dispositif selon une ou plusieurs des revendications précédentes, caractérisé en ce que la liaison de friction est obtenue à l'aide d'un ressort à lame (53) disposé en forme de sécante sur l'une des rondelles d'écartement (42), en venant tangenter l'ouverture intérieure (51).

11. Dispositif selon une ou plusieurs des revendications précédentes, caractérisé en ce que le ressort à lame (53) est inséré par sa face large dans un canal (52) en forme de sécante.

12. Dispositif selon une ou plusieurs des reventications précédentes, caractérisé en ce que la rondelle d'écartement (89, 95) est amenée en position d'appui à l'aide d'un blocage amovible de forme par rapport à la vis de liaison (27).

# FIG.1

0 176 663

FIG.2

0 176 663

FIG.3

FIG.4

# FIG.5

# FIG.6

FIG.7

FIG.8

4

FIG.9

# FIG.10

FIG.11

0 176 663

FIG.12

FIG. 14

11  18        12      B

16      15  17  28

9

FIG. 13

25
19
18  14  12  9  14
28

14
11
16
XV
17
XIV  XIV
14
10
14
14  13  14

FIG. 15

14
90°

## FIG.17

## FIG.18

## FIG.16

9

## FIG.19

## FIG.20

0 176 663

# FIG. 21

Fig.22

Fig.23

Fig.24

Fig.25

Fig.26  Fig.27  Fig.28

Fig.29

Fig.30

Fig.31

14

Fig. 32

46'

47

64   64'        65              63

46'

47

69              66   67, 68   63

Fig. 33

15

Fig. 34

Fig. 35

Fig.36

# Fig. 37

# Fig.38

# Fig.39

# Fig.40

93 89
92
90
94
91
27

# Fig.41

94 93 89
92
90 91

# Fig.42

98 97 96
95
94
27

# Fig.43

97
98
95
96
27 94